# FASCICULE DE BREVET EUROPEEN

(11) **EP 1 211 381 B1**
(45) Date de publication et mention de la délivrance du brevet: **01.02.2006**
(21) Numéro de dépôt: 01403058.9
(22) Date de dépôt: 29.11.2001
(51) Int. Cl.: F01D 5/08, F01D 11/02

(54) **Flasque de disque aubagé de rotor et agencement correspondant**
Deckplatte für eine beschaufelte Rotorscheibe
Cover plate for a bladed rotor disk

(30) Priorité: 30.11.2000 FR 0015474
(43) Date de publication de la demande: 05.06.2002
(73) Titulaire: SNECMA, 75015 Paris (FR)
(72) Inventeur: Arilla, Jean-Baptiste, 92450 Issy Les Moulineaux (FR); Hacault, Michel, Gérard, Paul, 91300 Massy (FR); Maffre, Jean-Philippe, Julien, 77190 Dammarie Les Lys (FR); Sombounkhanh, Somphone, 91130 Yerres (FR)

(56) Documents cités:
- US-A- 2 928 650
- US-A- 3 455 537
- US-A- 4 466 239
- US-A- 5 310 319
- US-A- 5 597 167
- US-A- 5 984 636

## Description

L'invention concerne un flasque de disque aubagé de rotor et son agencement dans une turbo-machine.

Les turbines des réacteurs doivent souvent être rafraîchies pour qu'elles résistent aux échauffements du gaz venant de la chambre de combustion et qui les traverse, surtout aux premiers étages des turbines. On a développé des systèmes de refroidissement par ventilation au travers lesquels du gaz plus frais est soutiré d'une portion de la machine en amont de la chambre de combustion et soufflé sur les étages exposés des turbines. Dans certains agencements particuliers, un flasque fixé au rotor couvre le disque tournant à ventiler, jusque sous les pieds d'aubes, et le gaz est soufflé entre le flasque et le disque jusqu'à entrer dans des perçages qui traversent la périphérie du disque entre les aubes. On garantit ainsi une bonne ventilation du disque et surtout des portions les plus chaudes à la périphérie.

Le flasque s'étend entre un moyeu fixé au rotor et une périphérie libre adjacente au disque et qui doit être maintenue jointive à celui-ci afin d'éviter les fuites de gaz de ventilation. Dans des conceptions habituelles, les forces centrifuges produites par la manche de la machine déforment le flasque en le décollant du disque, ce qui rompt l'étanchéité et oblige à y remédier en façonnant des crochets sur le disque, sous lesquels le bord du flasque est engagé. Les crochets sont pourtant désavantageux en ce qu'ils renchérissent le coût de fabrication du disque et sont fragiles.

Une analyse de l'action des forces centrifuges amène à détailler la forme du flasque. On trouve en général qu'il existe une zone de flexion principale des sections du flasque dans un plan axial, dont la position est largement responsable du comportement d'ensemble du flasque sous l'effet des forces centrifuges, même si toutes les portions du flasque y sont soumises. Cette zone ressemble à un pivot au deçà duquel le flasque reste sensiblement indéformable et au delà duquel il se déforme beaucoup plus en raison soit de sa souplesse, soit de sa distance à l'axe de rotation. C'est ainsi qu'une forme usuelle de flasque comprend, à partir du moyeu plat où il est fixé au rotor, un bras en forme de manchon tubulaire, puis une toile sensiblement plate. Le bras est allégé en le rendant à peu près aussi mince que la toile ; la zone de flexion principale tend alors à se trouver sur le bras, qui se déforme en s'ouvrant du côté de la toile ; celle-ci bascule alors en s'éloignant du disque.

C'est pourquoi le brevet WO-99 32761 propose un agencement différent, où le flasque est pour l'essentiel dépourvu du manchon et comprend essentiellement, après le moyeu, une partie renflée très rigide puis une toile de plus en plus fine et inclinée en s'éloignant du disque. La zone de flexion principale est alors située sur la toile ; de plus, le flasque est pourvu d'une masselotte près de la périphérie de la toile, au delà de la zone de flexion principale et qui saille du côté détourné du disque : les forces centrifuges ont pour effet de redresser le flasque en diminuant l'inclinaison de la portion comprenant la masselotte, ce qui presse fermement l'extrémité libre du flasque contre le disque. Les crochets de maintien deviennent alors inutiles. Toutefois, la masselotte représente un alourdissement sensible du flasque.

C'est pourquoi il est souhaité, dans l'esprit de l'invention, d'obtenir un effet similaire de basculement du flasque sous l'action des forces centrifuges mais sans que cet effet soit produit par une pièce spéciale. On propose plutôt d'utiliser ce qu'on appelle les léchettes de joints à labyrinthe souvent rencontrées dans les turboréacteurs pour établir l'étanchéité le long du flasque.

Le document US 4 466 239 décrit un flasque dépourvu de manchon, proposant d'utiliser des léchettes de joints à labyrinthe comme moyen de régulation de la circulation de l'air de refroidissement.

Les léchettes d'un joint à labyrinthe comprennent une portion de manche ou de jonction à la pièce porteuse de la léchette et une portion de couteau qui s'effile jusqu'à une extrémité libre et établit l'étanchéité en entamant une couronne de matière d'érosion facile (appelée "abradable") fixée à l'autre pièce reliée par le joint. Contrairement à la construction usuelle où les couteaux des léchettes sont disposés radialement vers l'extérieur, ils sont ici inclinés axialement en s'éloignant du disque, ce qui les excentre et augmente ainsi le moment de basculement vers le disque que les forces centrifuges produisent à l'extrémité du flasque. De plus, des décalages axiaux et radiaux des parties en couteau des léchettes sont adoptés pour accroître l'excentrement des léchettes et ajuster l'effet global des forces centrifuges en les répartissant sur la toile. On verra que cette disposition décalée facilite aussi la fabrication des léchettes.

Pour résumer, l'invention est relative sous sa forme la plus générale à un agencement de flasque de disque aubagé de rotor, comportant un flasque, un disque, le flasque comprenant un moyeu fixé au rotor et une toile couvrant une face du disque et ayant une périphérie adjacente au disque, une pluralité de léchettes de joint à labyrinthe, disposées sur une face de la toile détournée du disque, les léchettes comprenant des parties en couteau inclinées vers une direction axiale du rotor et s'éloignant du flasque vers des extrémités effilées de couteau, les parties en couteau des léchettes étant décalées axialement et radialement les unes des autres et original en ce qu'un rayon passant par une zone de flexion principale du flasque est situé entre le disque et le centre d'inertie de la toile et des léchettes en section axiale.

Au sens de l'invention, la toile du flasque est la portion périphérique de ce flasque qui couvre le disque et qui se caractérise par une grande largeur radiale jointe à une finesse suffisante pour lui permettre de fléchir quand elle est soumise aux forces centrifuges du rotor. Elle comprend donc la zone de flexion principale et les zones situées au-delà jusqu'au bord du flasque.

Une portion de la toile qui porte les léchettes peut être inclinée dans la direction axiale du rotor en s'éloignant du disque vers la périphérie adjacente au disque, afin de favoriser le redressement de la toile sous l'effet des forces centrifuges et de renforcer l'appui de la périphérie du flasque sur le disque.

D'autres dispositions de l'invention, secondaires et néanmoins utiles, permettent encore d'ajuster ou de renforcer la flexion de la toile dans le sens favorable tout en autorisant à le ventiler efficacement.

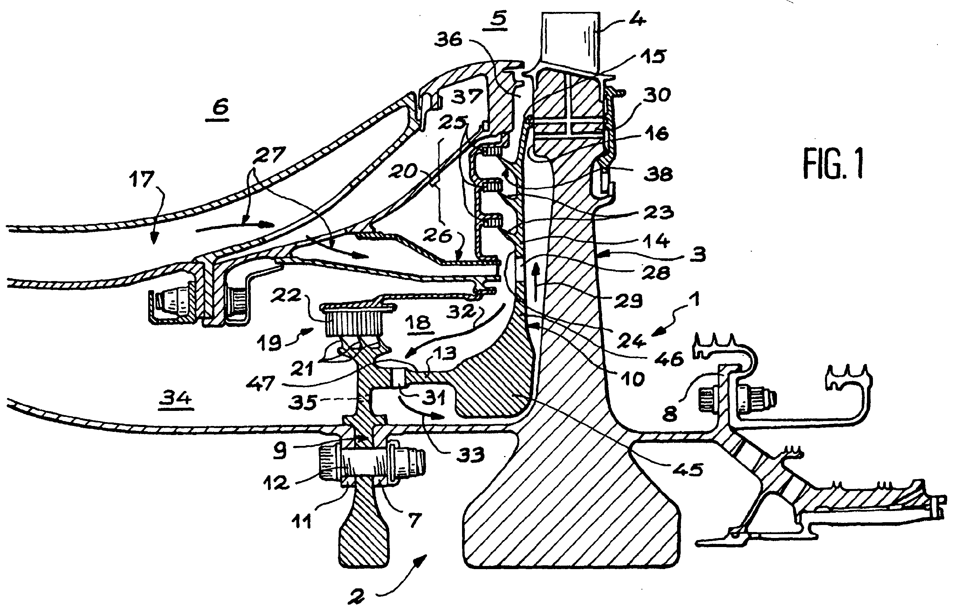

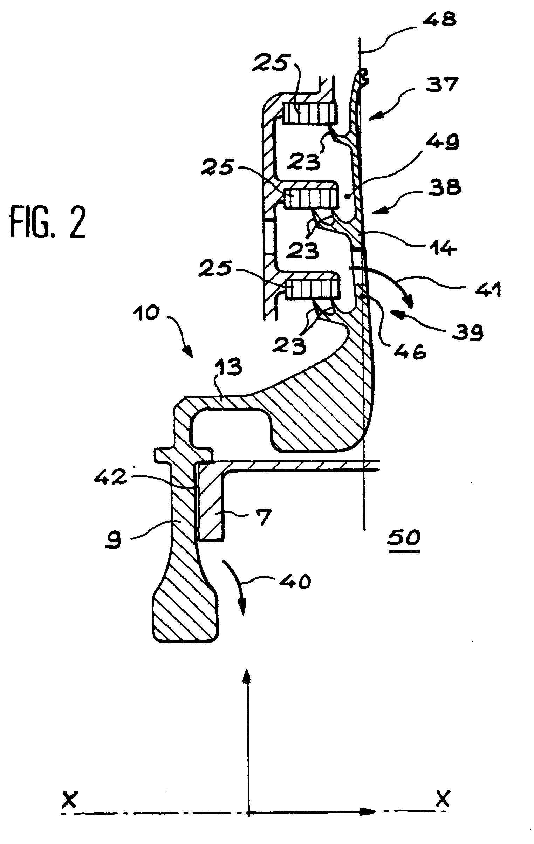

L'invention sera maintenant décrite, pour l'ensemble de ses caractéristiques et avantages, au moyen de la figure 1, qui représente une réalisation particulière d'un agencement du flasque conforme à l'invention, et de la figure 2, qui représente une variation de réalisation du flasque.

Un rotor porte la référence générale 1 à la figure 1 et comprend en particulier une section 2 à disque 3 muni d'un étage d'aubes 4 s'étendant dans une veine 5 de circulation des gaz juste en aval d'une chambre de combustion 6, qui soumet les aubes 4 et le disque 3 à un fort échauffement. La section 2 finit en des brides 7 et 8 boulonnées à d'autres sections du rotor, mais un moyeu 9 constituant la portion interne d'un flasque 10 est retenu entre la bride 7 et une bride 11 de la section de rotor adjacente à la section 2 des boulons de fixation 12. Après le moyeu 9, le flasque se continue en un bras 13, puis en une toile 14 formant la partie utile du flasque et couvrant la plus grande partie de la surface du disque 3 en regardant de la chambre de combustion 6 ; la périphérie de la toile 14 est libre et façonnée en une face d'appui 15 sur une glace 16 du disque 3. Un coude de raccordement 45, épais et très rigide, relie le bras 13 sensiblement tubulaire à la toile 14 sensiblement plate, sauf près de l'extrémité 15 où elle est inclinée vers la glace 16 pour la toucher. Une forme plate de toile 14 s'est en effet révélée favorable pour donner la déformation souhaitée ; une forme inclinée en s'éloignant du disque 3, qu'on illustrera nettement à la figure 2, peut donner encore de meilleurs résultats.

Une portion de stator 17 s'étend devant le flasque 10 et délimite une chambre 18 avec lui ; un joint à labyrinthe simple 19 délimite la chambre 18 du côté du rotor 1 et un joint à labyrinthe complexe 20 la délimite du côté de la veine 5. Le joint à labyrinthe simple 19 comprend des léchettes 21 circulaires et s'effilant en couteau, se dressant sur le pourtour du moyeu 9, et une couronne de matière abradable 22, formée en général d'une matière en nid d'abeille ou d'un autre matériau abradable, est fixée à la portion de rotor 17 autour des léchettes 21. Ainsi qu'il est connu, les dilatations thermiques produites au cours du fonctionnement de la machine et plus importantes dans le rotor 1 chauffé plus fortement font entrer les léchettes 21 dans la couronne de matière abradable 22 et y creusent des gorges ; le jeu entre les léchettes et le fond des gorges de la couronne abradable 22 reste minimal, ce qui, en combinaison au trajet sinueux que les fuites de gaz doivent accomplir pour traverser le joint à labyrinthe simple 19, réduit beaucoup leur débit.

Le joint à labyrinthe complexe 20 comprend de manière similaire des léchettes 23 -ici au nombre de trois- érigées sur la face 24 de la toile 14 qui est détournée du disque 3, et des couronnes de matière abradable 25 mais qui se succèdent radialement, une léchette 23 étant associée à une couronne 25 respective dans cette réalisation, alors qu'une couronne 22 unique est commune aux léchettes 21 de l'autre joint 19 ; mais un renforcement de l'étanchéité est obtenu dans les deux cas par la multiplicité de léchettes. De plus, les extrémités des léchettes 23 du joint complexe 20 sont aussi décalées axialement.

Du gaz est soufflé par un dispositif dont on ne représente que l'extrémité : il s'agit d'un tube 26 dont le diamètre est sensiblement plus petit que la longueur et qui débouche sans transition dans la chambre 18. Le gaz de ventilation originaire d'une autre partie du réacteur et suivant le trajet des flèches 27 subit donc une détente en entrant dans la chambre 18, devient co-rotatif avec le rotor et sa température s'abaisse considérablement. Il peut alors traverser la toile 14 du flasque 10 par des passages 28 avant de suivre un écoulement centrifuge représenté par les flèches 29 qui lui fait lécher la périphérie du disque 3 avant qu'il n'entre dans des perçages 30 qui lui font ventiler le coeur du disque 3 dans sa portion adjacente aux aubes 4.

Il est avantageux que des perçages supplémentaires 31 soient établis à travers le bras 13 afin de créer un courant de contournement, représenté par les flèches 32 et 33, à l'intérieur de la chambre 10 et passant près du joint à labyrinthe simple 19, puis entre le flasque 10 et le fond du disque 3. Le moyeu 9 est alors lui aussi ventilé malgré la présence de gaz plus chaud dans une cavité sous stator 34 que le joint 19 sépare de la chambre 18.

Dans certaines constructions, le gaz présent dans cette cavité sous stator 34 pourrait toutefois être assez frais, et les perçages supplémentaires 31 deviendraient inutiles ; il serait même possible de les supprimer et de les remplacer par des perçages 35 faisant communiquer directement la cavité 34 à l'espace compris entre le bras de raccordement 13 du flasque 10 et la section de rotor 2 à travers le moyeu 9 pour que le gaz de la cavité sous stator 34 contribue aussi à la ventilation du flasque 10 et du disque 3.

Le joint à labyrinthe complexe 20 a pour première fonction d'isoler la chambre 18 d'une cavité sous veine 36, adjacente aux aubes 4, remplie de gaz chaud. Toutefois, il contribue ici à une déformation favorable de la toile 14 du flasque 10 sous l'effet des forces centrifuges produites quand le rotor 1 tourne : contrairement à une situation fréquente, où les léchettes comprennent un couteau d'orientation purement radiale joint à la partie de support par un manche de forme cylindrique, les portions de couteau 37 des léchettes 23 sont fortement inclinées en direction de l'axe XX du rotor et situées presque dans le prolongement des manches 38, ce qui éloigne le centre de gravité des léchettes 23 de la toile 14. Les forces centrifuges exercées aux léchettes 23 ont alors pour effet de repousser plus fortement la toile 14 vers le disque 3, renforçant le contact entre la portée d'appui 15 et la glace 16. Cet effet d'incurvation peut être renforcé si la toile 14, ou du moins la portion qui porte les léchettes 23, est inclinée elle aussi en direction axiale en s'éloignant du disque 3 quand on la parcourt en s'éloignant de l'axe XX : les efforts centrifuges produits sur la toile 14 tendent à la redresser dans un seul plan radial et en la faisant pivoter autour de sa jonction au bras de raccordement 13 ce qui la rapproche du disque 3.

Ici, la zone de pivotement principale, référencée par 46, est à la transition entre la toile 14 et le coude 45 très épais. Chacune des léchettes 23 tend à se redresser sous l'action des forces centrifuges et exerce ainsi un moment de basculement sur la toile 14 à l'endroit où il lui est attaché. L'importance de ce moment et son effet sur la déformation de la toile 14 dépend du poids de la léchette 23, de son rayon, de son inclinaison, et de l'épaisseur locale de la toile 14. L'échelonnement des léchettes 23 en direction radiale est un moyen important d'ajuster la flexion d'ensemble de la toile 14 ; de même, la surface d'ouverture et le nombre des passages 28, qui sont situés tout près de la zone de flexion principale 46, influent beaucoup sur la souplesse de la toile 14.

Une conception judicieuse du bras 13, de sa longueur, de sa raideur et de la forme de sa jonction à la toile 14 peut aussi exercer un effet sur le contact de la portée d'appui 15. S'il est mince et muni des perçages supplémentaires 31, il peut s'ouvrir sous l'effet des forces centrifuges, ses sections présentant une zone de flexion 47 secondaire, généralement peu sensible puisque le bras 13 est plus rigide que la toile 14 et à un rayon plus petit. On doit aussi remarquer qu'une flexion autour de cette zone 47 a ici pour effet d'éloigner la toile 14 du disque 3 : elle est alors nuisible mais peut être tolérée si elle reste modérée.

Il est encore avantageux que les couteaux 37 des léchettes 23 soient étagés non seulement à des rayons différents, mais à des emplacements différents sur l'axe XX et ne soient ici pas alignés, car cette disposition leur permet d'être fabriqués plus facilement en les durcissant à la torche à plasma par un autre moyen. Un tel désalignement est manifeste à la figure 2 ; de plus, le joint à labyrinthe comprend trois groupes de léchettes 23 comme dans l'exemple précédent, mais si le groupe externe 37 comprend encore une seule léchette 23, le groupe intermédiaire 38 et le groupe interne 39 en comprennent chacun deux ; chacun des groupes 37, 38 et 39 est encore associé à une couronne de matière abradable 25 respective. L'addition de léchettes supplémentaires à un même rayon renforce l'étanchéité pour un même nombre de couronnes de matière abradable 25.

La figure 2 montre encore que la ventilation entre le bras 13 et la section de rotor 2 peut être assurée, conformément aux flèches d'écoulement 40 et 41, en creusant des rainures 42 à la jonction entre la bride 7 et le moyeu 9, par exemple dans celle-là, afin que le gaz de ventilation du flasque 10, originaire par exemple des passages 28, soit aspiré dans une cavité de rotor 50 en passant par l'intérieur du bras 13.

Enfin, on a tracé sur cette figure 2 le rayon 48 passant par la zone de flexion principale 46 : on voit clairement que le centre d'inertie 49 de la portion du flasque 10 au delà de cette zone 46 (qui correspond à peu près à la toile 14) est situé nettement de l'autre côté que le disque 3 par rapport à ce rayon 48, ce qui est la condition de la flexion dans le sens recherché ; et l'inclinaison de la toile 14 en s'éloignant du disque 3 est rendue manifeste.

## Revendications

1. Agencement de flasque de disque aubagé de rotor, comportant un flasque (10), un disque (3), le flasque (10) comprenant un moyeu (9) fixé au rotor (1), une toile (14) couvrant une face du disque (3) et ayant une périphérie (14) adjacente au disque, une pluralité de léchettes (23) de joint à labyrinthe (20), disposées sur une face (24) de la toile détournée du disque, les léchettes (23) comprenant des parties en couteau inclinées vers une direction axiale du rotor et s'éloignant du flasque (10) vers des extrémités effilées de couteau, les parties en couteau des léchettes étant décalées axialement et radialement les unes des autres
**caractérisé en ce qu'**un rayon (48) passant par une zone de flexion principale (46) du flasque est situé entre le disque (3) et le centre d'inertie (49) de la toile (14) et des léchettes (23) en section axiale.

2. Agencement de flasque selon la revendication 1, **caractérisé en ce qu'**une portion de la toile qui porte les léchettes est inclinée dans la direction axiale du rotor en s'éloignant du disque vers la périphérie adjacente au disque.

3. Agencement de flasque selon l'une quelconque des revendications précédentes, **caractérisé en ce qu'**il comprend une portion de stator (17) située devant la face détournée du disque de la toile, ladite portion portant des portions complémentaires (25) des léchettes (23) du joint à labyrinthe, un moyen (26) de soufflage de gaz frais débouchant dans une chambre (18) comprise entre le flasque (10) et la portion de stator (17), le flasque étant percé de passages (28) du gaz frais vers le disque (3).

4. Agencement de flasque selon la revendication 3, **caractérisé en ce que** les passages (28) sont opérés à travers la zone de flexion principale du flasque.

5. Agencement de flasque selon la revendication 4, **caractérisé en ce que** le moyen de soufflage finit dans la chambre en un tube d'injection.

6. Agencement de flasque selon l'une quelconque des revendications 3 à 5, **caractérisé en ce qu'**il comprend des passages (31) traversant une portion (13) tubulaire du flasque comprise entre le moyeu (9) et la toile (14), et **en ce qu'**un autre joint à labyrinthe (19) est jeté entre le moyeu (9) du flasque et la portion de stator (17).

7. Agencement de flasque selon l'une quelconque des revendications 3 à 5, **caractérisé en ce qu'**il comprend des rainures (42) d'évacuation de gaz établies à travers un joint de contact du moyeu (9) du flasque et d'une bride (7) de fixation du disque.

8. Agencement de flasque selon l'une quelconque des revendications 1 à 7, **caractérisé en ce que** les joints à labyrinthe comprennent, outre les léchettes, des portions de matière abradable (22, 25).

## Patentansprüche

1. Anordnung für einen Flansch einer beschaufelten Scheibe eines Rotors, umfassend einen Flansch (10), eine Scheibe (3), wobei der Flansch (10) umfasst: eine am Rotor (1) fixierte Nabe (9), eine Gitter-Anordnung (14), welche eine Seite der Scheibe (3) abdeckt und einen zur Scheibe benachbarten Umfang (15) aufweist, eine Mehrzahl von Laschen (23) vom Labyrinth-Verbindungs-Typ (20), welche an einer von der Scheibe abgewandeten Seite (24) der Gitter-Anordnung angeordnet sind, wobei die Laschen (23) messerartige Abschnitte umfassen, welche in einer Axial-Richtung des Rotors geneigt sind, und sich von dem Flansch (10) zu den verjüngten Enden des Messers hin entfernen, wobei die messerartigen Abschnitte der Laschen axial und radial gegeneinander versetzt sind,
**dadurch gekennzeichnet, dass** ein durch eine Haupt-BiegeZone (46) des Flansches verlaufender Radius-Strahl (48) im Axial-Schnitt zwischen der Scheibe (3) und dem Schwerpunkt (49) der Gitter-Anordnung (14) und der Laschen (23) angeordnet ist.

2. Flansch-Anordnung gemäß Anspruch 1, **dadurch gekennzeichnet, dass** ein die Laschen tragender Abschnitt der Gitter-Anordnung in der Axial-Richtung des Rotors geneigt ist, wobei er sich von der Scheibe zum zur Scheibe benachbarten Umfang hin entfernt .

3. Flansch-Anordnung gemäß einem der vorhergehenden Ansprüche, **dadurch gekennzeichnet, dass** sie einen Stator-Abschnitt (17) umfasst, welcher vor der von der Scheibe abgewandten Seite der Gitter-Anordnung angeordnet ist, wobei dieser Abschnitt zu den Laschen (23) komplementäre Abschnitte (25) der Labyrinth-Verbindung trägt, wobei eine Frischgas-Blas-Vorrichtung (26) in eine Kammer (18) einmündet, welche zwischen dem Flansch (10) und dem Stator-Abschnitt (17) ausgebildet ist, wobei in den Flansch Passagen (28) von Frischgas zur Scheibe (3) eingestochen sind.

4. Flansch-Anordnung gemäß Anspruch 3, **dadurch gekennzeichnet, dass** die Passagen (28) quer zur Haupt-Biege-Zone des Flansches eingearbeitet sind.

5. Flansch-Anordnung gemäß Anspruch 4, **dadurch gekennzeichnet, dass** die Blas-Vorrichtung in der Kammer in einer Injektions-Röhre endet.

6. Flansch-Anordnung gemäß einem der Ansprüche 3 bis 5, **dadurch gekennzeichnet, dass** sie Durchgänge (31) umfasst, welche einen rohrförmigen Abschnitt (13) des Flansches queren, welcher zwischen der Nabe (9) und der Gitter-Anordnung (14) umfasst ist, und **dadurch**, dass eine andere Labyrinth-Verbindung (19) zwischen der Nabe (9) des Flansches und dem Stator-Abschnitt (17) angeordnet ist.

7. Flansch-Anordnung gemäß einem der Ansprüche 3 bis 5, **dadurch gekennzeichnet, dass** sie Rillen (42) zum Evakuieren von Gas umfasst, welche quer zu einer Kontakt-Verbindung der Nabe (9) des Flansches und einer Fixier-Bördelung (7) der Scheibe etabliert sind.

8. Flansch-Anordnung gemäß einem der Ansprüche 1 bis 7, **dadurch gekennzeichnet, dass** die Labyrinth-Verbindungen außer den Laschen Abschnitte aus Verschleiß-Material (22,25) umfassen.

## Claims

1. Bladed rotor disc end-plate arrangement, comprising an end-plate (10), a disc (3), the end-plate (10) comprising a hub (9) attached to the rotor (1), a web (14) covering one face of the disc (3) and having a periphery (14) adjacent to the disc, a plurality of slivers (23) of labyrinth seal (20), disposed on one face (24) of the web turned away from the disc, the slivers (23) comprising knife portions inclined towards an axial direction of the rotor and leading away from the end-plate (10) towards sharp knife-ends, the knife portions of the slivers being offset axially and radially from one another
**characterized in that** a radius (48) passing through a main flexion zone (46) of the end-plate is situated between the disc (3) and the centre of inertia (49) of the web (14) and of the slivers (23) in axial section.

2. End-plate arrangement according to Claim 1, **characterized in that** a portion of the web that supports the slivers is inclined in the axial direction of the rotor while leading away from the disc towards the adjacent periphery of the disc.

3. End-plate arrangement according to any one of the preceding claims, **characterized in that** it comprises a stator portion (17) situated in front of the secluded face of the disc of the web, the said portion supporting complementary portions (25) of the slivers (23) of the labyrinth seal, a means (26) of blowing cool gas opening into a chamber (18) lying between the end-plate (10) and the stator portion (17), the end-plate being pierced with cool gas passages (28) towards the disc (3).

4. End-plate arrangement according to Claim 3, **characterized in that** the passages (28) are made through the main flexion zone of the end-plate.

5. End-plate arrangement according to Claim 4, **characterized in that** the blowing means ends in the chamber in an injection tube.

6. End-plate arrangement according to any one of Claims 3 to 5, **characterized in that** it comprises passages (31) traversing a tubular portion (13) of the end-plate lying between the hub (9) and the web (14), and **in that** another labyrinth seal (19) is thrown between the hub (9) of the end-plate and the stator portion (17).

7. End-plate arrangement according to any one of Claims 3 to 5, **characterized in that** it comprises gas discharge grooves (42) established through a contact seal of the hub (9) of the end-plate and of a flange (7) for attaching the disc.

8. End-plate arrangement according to any one of Claims 1 to 7, **characterized in that** the labyrinth seals comprise, in addition to the slivers, portions of abradable material (22, 25).
